(19) Europäisches Patentamt
European Patent Office
Office européen des brevets

(11) EP 0 581 642 B1

(12) FASCICULE DE BREVET EUROPEEN

(45) Date de publication et mention de la délivrance du brevet: **11.06.1997 Bulletin 1997/24**

(51) Int Cl.[6]: **C08G 69/48**, C08G 63/91, C08G 65/48, C08G 65/32

(21) Numéro de dépôt: **93401873.0**

(22) Date de dépôt: **20.07.1993**

(54) **Polymères et copolymères issus de l'addition d'oligomères à terminaisons di-carboxy et de bisoxazines ou de bisoxazolines**

Durch Addition von Oligomeren mit zwei Carboxylendgruppen zu Bisoxazinen oder Bisoxazolinen hergestellte Polymere oder Copolymere

Polymers and copolymers prepared by the addition of di-carboxy terminated oligomers to bisoxazines or bisoxazolines

(84) Etats contractants désignés:
**AT BE CH DE DK ES FR GB GR IE IT LI LU NL PT SE**

(30) Priorité: **24.07.1992 FR 9209186**

(43) Date de publication de la demande: **02.02.1994 Bulletin 1994/05**

(73) Titulaire: **ELF ATOCHEM S.A.
92800 Puteaux (FR)**

(72) Inventeurs:
- **Douhi, Abderrahim
F-89600 Saint Florentin (FR)**
- **Fradet, Alain
F-92130 Issy Les Moulineaux (FR)**
- **Judas, Didier
F-75017 Paris (FR)**

(74) Mandataire: **Le Guen, Gérard et al
CABINET LAVOIX
2, place d'Estienne d'Orves
75441 Paris Cédex 09 (FR)**

(56) Documents cités:
- **PATENT ABSTRACTS OF JAPAN vol. 12, no. 338 (C-527)12 Septembre 1988 & JP-A-63 099 228**
- **PATENT ABSTRACTS OF JAPAN vol. 6, no. 57 (C-098)14 Avril 1982 & JP-A-57 002 336**
- **PATENT ABSTRACTS OF JAPAN vol. 12, no. 198 (C-502)8 Juin 1988 & JP-A-63 000 313**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 581 642 B1

Printed by Jouve, 75001 PARIS (FR)

## Description

La présente invention concerne des polymères et des copolymères pouvant atteindre des masses molaires élevées et leur procédé d'obtention à pression atmosphérique, sans élimination de sous-produits, par une réaction rapide adaptable au procédé R.I.M. (moulage par injection et réaction) à 150-350° C. Plus précisément, cette réaction est une addition de coupleurs de chaînes de type iminoéthers cycliques et d'oligomères à extrémités réactives carboxy.

Les polycondensations classiques sont des réactions équilibrées. Il est difficile d'obtenir des polymères de masses molaires élevées à moins de travailler à température élevée, sous pression réduite pendant un temps de réaction très long, d'où l'existence de réactions secondaires et éventuellement de dégradations des polymères.

Pour pallier ces difficultés, la demanderesse a fait réagir en masse des oligomères bien définis à extrémités réactives, à une température supérieure à leur température de fusion, avec des molécules appelées coupleurs de chaîne (CC) pour obtenir un produit de forte masse molaire. Les CC auxquels la demanderesse s'est intéressée sont, plus précisément, des bisoxazines et des bisoxazolines.

Il est connu d'utiliser de tels coupleurs de chaînes pour accroître les masses molaires de polymères de masses molaires déjà élevées, porteurs de fonctions réactives, mais présentes en faible teneur. On augmente alors la viscosité de ces polymères, et on en diminue l'acidité résiduelle.

Ainsi, le brevet japonais Kokai Tokkyo Koho JP 63099228 décrit la coextrusion d'un polytéréphtalate d'éthylène de masse molaire élevée et comportant peu de fonctions carboxy terminales, et d'une bisoxazoline.

Toutefois, ce document selon lequel les produits de départ sont des polymères de masses molaires élevées, n'indique pas comment surmonter les difficultés d'obtention de tels polymères, et particulièrement par polycondensation.

JP-A-63 000 313 décrit une réaction similaire entre un polyester, une bis-oxazoline et une phénylènebisoxazoline. JP-A-57 002 336 décrit également la réaction d'un polyester saturé linéaire avec un biscycloiminoéther tel qu'une bisoxazoline.

La présente invention a donc pour objet des polymères et copolymères comprenant au moins un motif récurrent de formule :

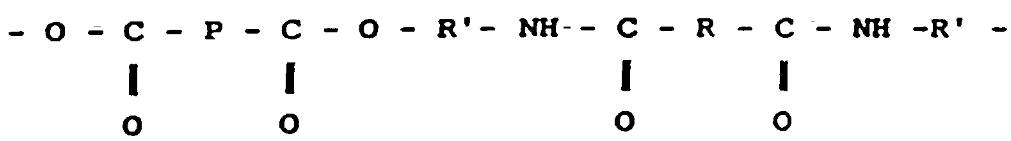

dans laquelle

- R est une liaison simple, une chaîne hydrocarbonée aliphatique, linéaire ou cyclique, ou aromatique pouvant être substituée,
- R' est une chaîne hydrocarbonée aliphatique ou aromatique, pouvant être substituée et dont la chaîne la plus courte reliant les motifs - O ... et - NH ... voisins comporte deux ou trois atomes de carbone, et
- P est le reste d'un oligomère

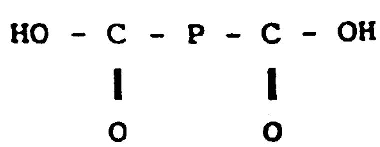

dont la viscosité de solution déterminée dans le méta-crésol à 30°C à des concentrations de 0,5 g/dl est inférieure à 0,50 dl.g$^{-1}$, et la masse molaire moyenne en nombre $\overline{M_N}$ est comprise entre 300 ec 5 000 g/mol, ces polymères étant les produits de réaction d'un ou plusieurs oligomère(s)

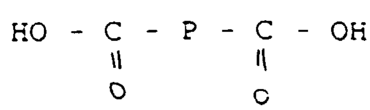

et d'une ou plusieurs bisoxazine(s) ou bisoxazoline(s) de formule(s) :

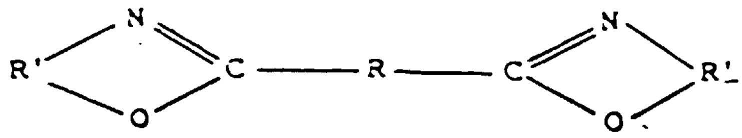

réaction dans laquelle le rapport

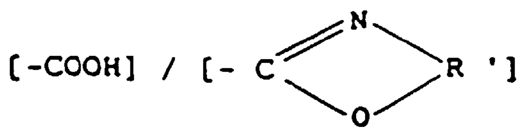

est maintenu entre 0,95 et 1,05.

. R peut par exemple consister en :

- une liaison simple
- une chaîne hydrocarbonée du type $(CH_2)_q$ avec q compris entre 1 et 24 dans laquelle un ou plusieurs atomes de carbone peuvent être mono- ou di- substitués et pouvant comporter un cycle aliphatique ou aromatique, ou encore une insaturation oléfinique,
- un ortho-, méta- ou para- phénylène, ou un ortho-, méta- ou para- alkylphénylène, pouvant être substitués.

. R' peut être par exemple constitué de :

- une chaîne hydrocarbonée du type $-(CH_2)_p-$, avec p = 2 ou 3, dont un ou plusieurs atomes de carbone constitutifs peuvent être mono- ou di- substitués par des groupes alkyle tels que les groupes méthyle, éthyle, propyle,
- deux de ces atomes de carbone consécutifs pouvant de surcroît faire partie d'un cycle benzénique, pouvant lui même être substitué par un ou plusieurs groupes alkyle.

. P est le reste d'un oligomère

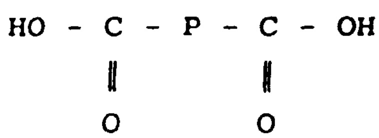

mono- ou polyséquencé dont les séquences peuvent par exemple consister en polyamide, polyéther, polyester. On citera, en particulier : - un polyamide à extrémités di-COOH obtenu à partir de

- diacides aromatiques, par exemple acides iso et téréphtalique, acides naphtalènes dicarboxyliques (en position 2,6; 1,5; 2,7), **4**,**4'** dicarboxydiphényléther, **4**,**4'**-dicarboxybiphényle,
- diacides ou anhydrides aliphatiques, par exemple en $C_4$ à $C_{24}$ linéaires ou ramifiés tels qu'acides adipique, sébacique, décane-1,10-dioïque, dodécane-1,12-dioïque, fumarique, anhydride maléique,
- diacides cycloaliphatiques tels qu'acide cyclohexane
- diamines cycloaliphatiques, par exemple 4,4'-diamino-bis(cyclohexyl méthane) substituée ou non telle la bis (3,3'-méthyl-4,4'-amino-cyclohexylméthane), la bis(4,4'-amino-cyclohexylméthane), l'isophorone diamine,
- diamines aliphatiques, par exemple en $C_4$ à $C_{24}$ linéaires ou ramifiés, telles que l'hexaméthylène-1,6-diamine, la dodécaméthylène -1,12-diamine,
- lactames, par exemple en $C_5$ à $C_{14}$ tels que les caprolactames, dodécalactames,
- aminoacides, par exemple en $C_5$ à $C_{24}$ tels que l'acide 11-aminoundécanoïque,

  en présence d'un excès de diacide,

  et ayant pour formule :

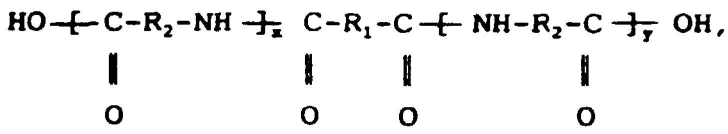

tel que décrit dans la demande de brevet européen EP-A-281 461 au nom de la Demanderesse, et dans lequel

. $R_2$ est :

- une chaîne hydrocarbonée constituant un lactame et/ou un aminoacide, ou
- une structure

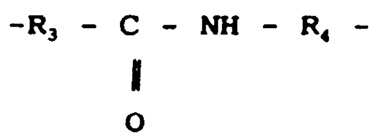

dans laquelle $R_3$ et $R_4$ sont respectivement les restes hydrocarbonés d'un diacide et d'une diamine ;

. $R_1$ représente le reste du diacide organique utilisé comme limitateur de chaîne;
. x et y sont des nombres entiers > 0, tels que $\overline{x + y} \geq 1$,

- un polyester à extrémités di-COOH à structure aliphatique ou semi-aromatique pouvant comporter une ou plusieurs insaturations oléfiniques, obtenu à partir de diacide et/ou d'anhydride d'acide en excès, tels que ceux cités précédemment, et que l'anhydride succinique ou phtalique, et de diol, tel que diol aliphatique en $C_2$ à $C_{24}$ linéaire ou ramifié, par exemple éthylène glycol, propylène glycol, butane -1,4-diol, pentane -1,5-diol, hexane-1,6-diol, diéthylène glycol, triéthylène glycol, et ayant pour formule :

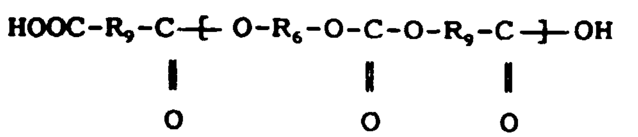

dans laquelle t est supérieur à 1, $R_6$ représente le reste d'un diol, et $R_9$ le reste d'un diacide et/ou d'un anhydride d'acide,
- un polyamide à extrémités di-COOH à structure semi-aromatique obtenu à partir de diacides aromatiques et/ou aliphatiques, de diamines cycloaliphatiques et/ou aliphatiques, et/ou de lactame et/ou d'aminoacide tels que ceux cités précédemment, dans un rapport tel que $[CO\text{-}OH]/[NH_2] = m+1/m$, avec m entier $\geqq 1$, et en particulier un polyamide tel que décrit dans la demande de brevet EP-A-313 436 au nom de la Demanderesse,
- un polyéther à terminaisons di-COOH de formule

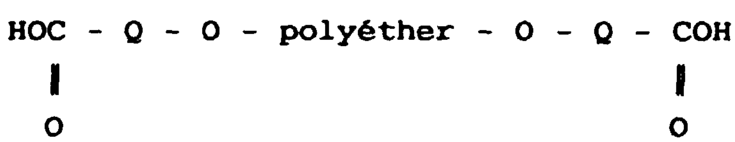

dans laquelle Q est une chaîne hydrocarbonée de type $(CH_2)_n$, n étant compris entre 1 et 24, un ou plusieurs atomes de carbone pouvant être mono- ou disubstitués, ce polyéther étant obtenu par modification chimique d'un polyéther di-OH, telle que la réaction avec 2 moles d'un diacide, par mole de polyéther, ce polyéther diOH pouvant consister en polyéthylène glycol, polypropylène glycol, polytétraméthylène glycol, ou en leurs copolymères,
- un oligomère triséquencé (a = 1) ou polyséquencé (a > 1) de formule :

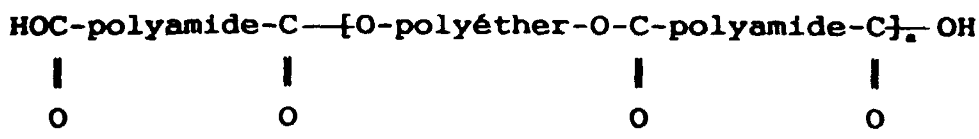

obtenu à partir de polyamide à extrémités di-COOH et de polyéther à extrémités di-OH, tels que ceux décrits précédemment,

- un oligomère obtenu par substitution d'une séquence polyester à chaque séquence polyamide d'un oligomère précédent, c'est-à-dire un oligomère triséquencé (a = 1) ou polyséquencé (a > 1) de formule :

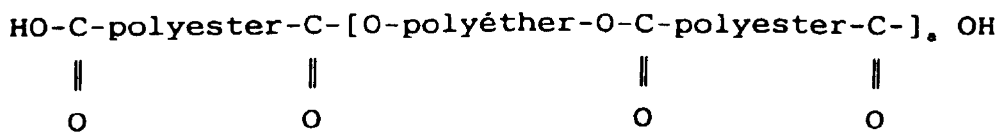

Les oligomères

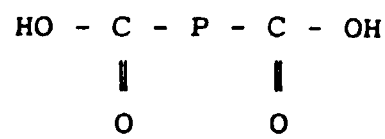

mis en oeuvre ont notamment des viscosités de solutions, déterminées dans le méta-crésol à 30°C, à des concentrations de 0,5 g/dl, comprises entre 0,05 et 0,50 dl $g^{-1}$, et des masses molaires moyennes en nombre $\overline{M_N}$ comprises entre 300 et 5000.

Les polymères selon la présente invention sont obtenus par réaction d'addition en masse d'oligomères

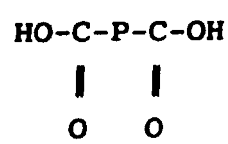

et de bisoxazines et/ou de bisoxazolines de formule

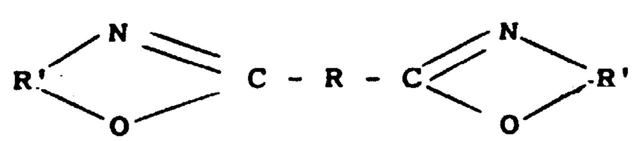

dans laquelle R, R' et P sont tels que précédemment définis. Cette réaction d'addition ou de couplage est conforme au schéma général suivant :

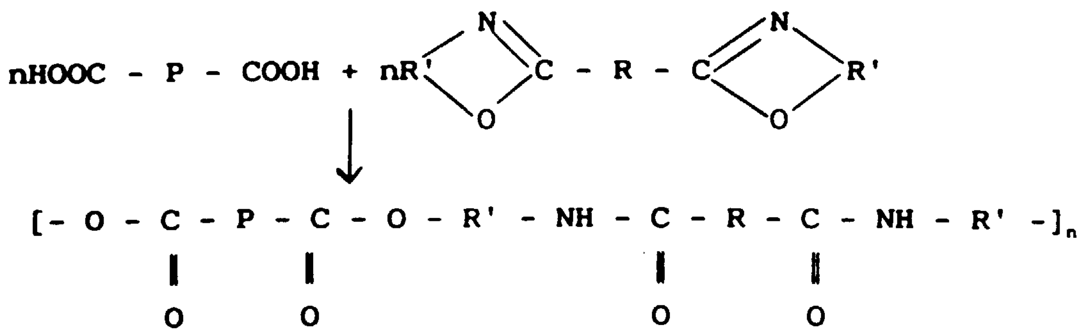

Pour effectuer cette synthèse, il convient de choisir une température telle que la viscosité de l'oligomère soit suffisamment faible, et notamment inférieure à 500 Pa.s et de préférence inférieure à 300 Pa.s, pour que les molécules de coupleurs de chaînes puissent se disperser, s'incorporer et/ou se solubiliser dans l'oligomère. Cette température est comprise entre 100 et 350° C, et de préférence entre 150 et 330° C.

La durée de la réaction sous atmosphère inerte est comprise entre 1 et 120 minutes, de préférence entre 5 et 30 minutes, à pression atmosphérique.

On peut ainsi obtenir des polymères selon l'invention, dont les viscosités de solution déterminées dans le méta-crésol à 30°C, à des concentrations de 0,5 g/dl sont supérieures à celles de l'oligomère (ou des oligomères) de départ pouvant atteindre, par exemple, des valeurs supérieures à 0,8 dl $g^{-1}$, de masses molaires moyennes en nombre $\overline{M}_n$ élevées, supérieures à 10000, sans élimination de sous-produits et sans les autres difficultés inhérentes aux polycondensations classiques.

On peut utiliser un ou plusieurs coupleurs de chaînes et un ou plusieurs oligomères. Ainsi, l'ajout simultané ou au contraire, consécutif, d'oligomères différents, permet d'obtenir des polymères à caractères statistiques ou séquencés plus ou moins prononcés.

L'utilisation d'un catalyseur n'est pas nécessaire, mais accélère la réaction. On ajoute alors 0,001 à 2 % en poids, par rapport aux oligomères et aux coupleurs de chaînes, et de préférence 0,01 à 0,5 % d'un ou plusieurs catalyseurs classiques, tels que la 4,4' diméthylaminopyridine, l'acide paratoluènesulfonique, $H_3PO_4$, NaOH, ou ceux décrits dans la demande de brevet européen EP-A-425 341 au nom de la Demanderesse.

Dans ces conditions, la réaction peut être effectuée en discontinu dans un réacteur agité, ou dans une extrudeuse. On peut alors opérer par mélange sec, ou incorporer le coupleur dans l'oligomère fondu au niveau d'un fourreau de l'extrudeuse, en l'introduisant en continu en fonction du débit de l'extrudeuse afin de respecter la stoechiométrie des fonctions réactives.

On maintient le rapport

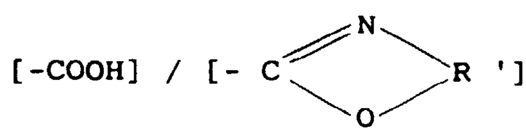

entre 0,95 et 1,05.

De ce fait, le produit de la réaction comportera des groupements terminaux -COOH si ce rapport est supérieur à 1, des groupements terminaux

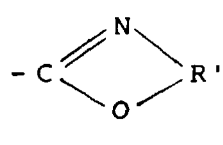

si ce rapport est inférieur à 1, ou à la fois ces deux groupements terminaux si ce rapport est égal à 1.

Les exemples suivants illustrent l'invention.

Dans ces exemples :

- les points de fusion et de transition vitreuse ont été déterminés par Calorimétrie par analyse différentielle (DSC, DuPont 9900). Les points de fusion ont été déterminés au maximum de l'endotherme de fusion à une vitesse de

chauffage de 20° C/min, au second passage après un cycle de chauffage à 20°C/min. jusqu'à une température supérieure au point de fusion de l'échantillon analysé, suivi d'un refroidissement à 40°C/min. jusqu'à température ambiante.

- Les pertes de masse ont été mesurées par Thermogravimétrie (TGA DuPont 951) à 20° C/min. $T_{5\%}$ correspond à la température à laquelle le produit a perdu 5 % de sa masse initiale.
- Les dosages chimiques ont été effectués sur un appareil Mettler DL40 RC. Un dosage à blanc a toujours été effectué avant le dosage proprement dit.

L'acidité a été titrée par une solution alcoolique de potasse 0,1N ou 0,05N, l'échantillon étant dissous dans un mélange toluène/chloroforme 1/1 (vol) ou dans l'alcool benzylique à 40°C lorsqu'il n'était pas soluble dans les conditions précédentes (cas des oligomères, polymères et copolymères contenant des blocs polyamide).

- La viscosité de solution $\eta_{inh}$ a été déterminée dans le méta-crésol à 30°C à des concentrations de 0,5 g/dl.

Les coupleurs de chaînes utilisés et les oligomères de départ sont les suivants :

**Coupleurs de chaînes :**

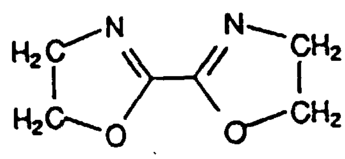

A

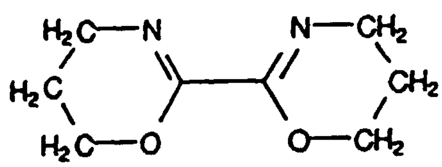

B

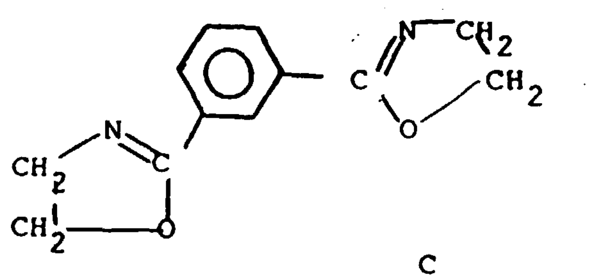

C

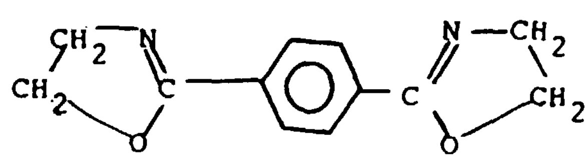

D

Ces coupleurs de chaînes peuvent être obtenus par réaction d'un diacide ou d'un diester et d'un amino alcool, suivie d'une cyclisation.

Ainsi, on peut obtenir le coupleur de chaîne A de la manière suivante :

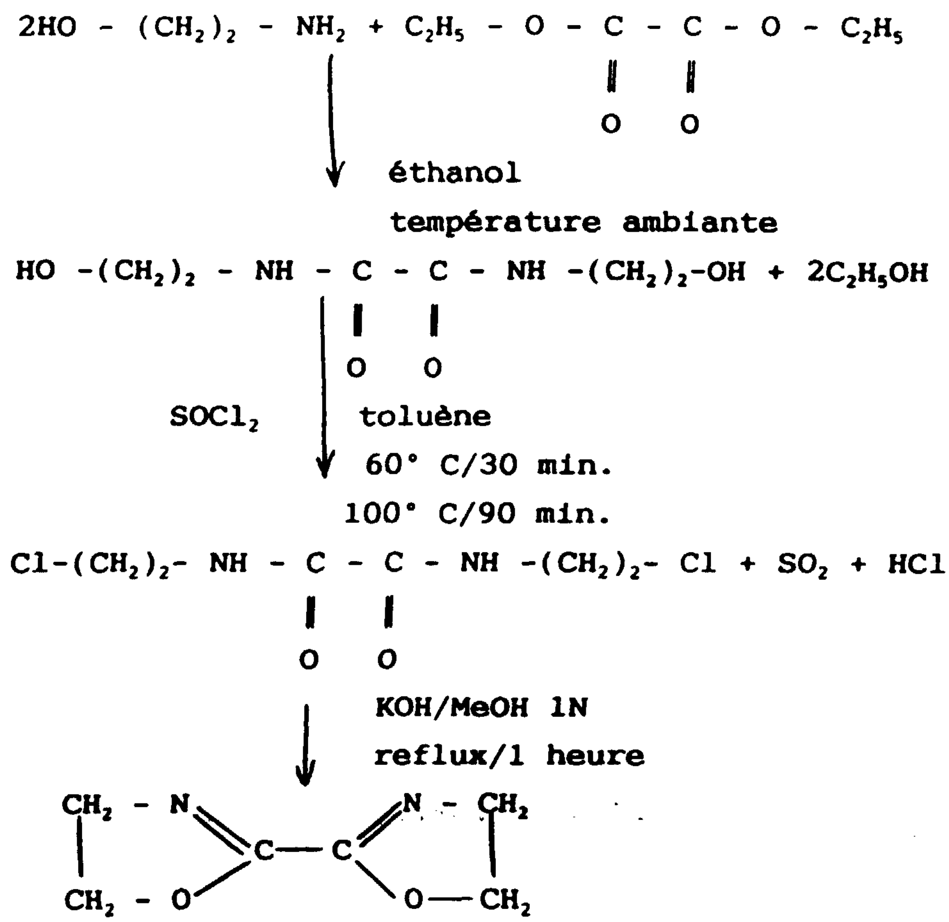


Oligomères :

Les oligomères I, II et III sont représentés dans le tableau ci-dessous :

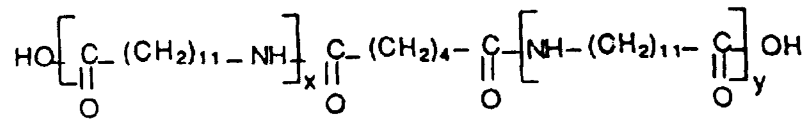

, avec x + y = 4

I

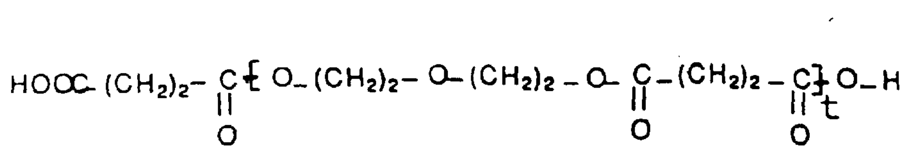

, avec t = 5,07

II

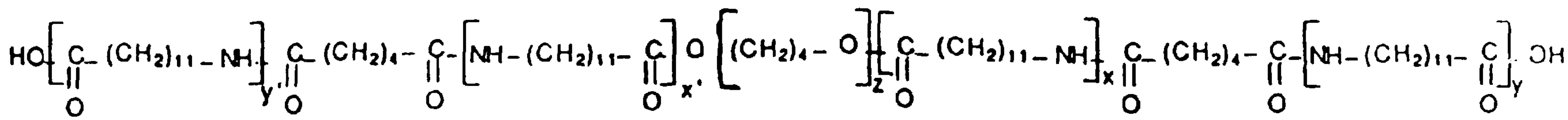

III

avec z = 14,19 et x + y = 3,86

L'oligomère IV, fonctions terminales di-COOH, est obtenu à partir :

- d'acide téréphtalique (T)
- d'acide isophtalique (I)
- de lactame 12 (L12)
- et de bis(3,3'-méthyl-4,4'-amino cyclohexyl) méthane (BMACM) avec T/I/L12/BMACM = 2,8/1,2/3/3 (en moles).

L'oligomère V est obtenu à partir des mêmes monomères avec T/I/L12/BMACM = 3,6/2,4/5/5 (en moles).
L'oligomère VI, à fonctions terminales di-COOH, est obtenu à partir :

- d'acide téréphtalique (T),
- d'hexaméthylène diamine (HMDA),
- et de lactame 12 (L12),

avec T/HMDA/L12 = 6/5/6 (en moles).
Contrairement aux oligomères I à V, amorphes, l'oligoamide VI est semi-cristallin.
Les caractéristiques des oligomères de départ sont consignées dans le tableau ci-dessous.

| Oligomères | fonctions COOH terminales (mol $kg^{-1}$) | $\eta_{inh}$ ($dlg^{-1}$) | $\overline{M}_n$ | Tf (°C) | $T_{5\%}$ (°C) |
|---|---|---|---|---|---|
| I | 1,915 | 0,16 | 1045 | 145 | 355 |
| II | 1,783 | 0,08 | 1122 | -- | 266 |
| III | 0,71 | 0,28 | 2817 | 151 | 340 |
| IV | 1,072 | 0,18 | 1865 | -- | 335 |
| V | 0,667 | 0,25 | 3000 | -- | 348 |
| VI | 0,775 | 0,18 | 2580 | 265 | 345 |

**Exemple 1 : Réaction de l'oligoamide I avec la bisoxazoline A**

Dans un réacteur de 50 $cm^3$ équipé d'un chauffage à bain d'huile, d'une entrée et d'une sortie d'azote, et d'une agitation mécanique à ancre, on introduit 10,00 g (9,57 mmol) de I et 1,342 g (9,57 mmol) de bisoxazoline A. Le mélange est porté à 200° C sous agitation pendant 20 min pour donner, après refroidissement, un polymère ayant les caractéristiques suivantes:

[COOH] = 0,17mol/kg
$[\eta]_{inh}$ = 0,52 dl/g
$T_f$ = 152° C
$T_{5\%}$ = 360° C

**Exemple 2 : Réaction de l'oligoamide I avec la bisoxazine B**

Dans un réacteur de 50 $cm^3$ équipé d'un chauffage à bain d'huile, d'une entrée et d'une sortie d'azote, et d'une agitation mécanique à ancre, on introduit 10,00 g (9,57 mmol) de I et 1,610 g (9,57 mmol) de bisoxazine B. Le mélange est porté à 200° C sous agitation pendant 20 min pour donner, après refroidissement, un polymère ayant les caractéristiques suivantes:

[COOH] = 0,13 mol/kg
$[\eta]_{inh}$ = 0,35 dl/g
$T_f$ = 151° C
$T_{5\%}$ = 406° C

**Exemple 3 : Réaction de l'oligoester dicarboxy II avec la bisoxazoline A**

Dans un réacteur de 50 $cm^3$ équipé d'un chauffage à bain d'huile, d'une entrée et d'une sortie d'azote, et d'une agitation mécanique à ancre, on introduit 10,00 g (8,913 mmol) de II et 1,249 g (8,913 mmol) de bisoxazoline A. Le mélange est porté à 180° C sous agitation pendant 20 min pour donner, après refroidissement, un polymère ayant les

caractéristiques suivantes:

$[COOH] = 0{,}12$ mol/kg
$[\eta]_{inh} = 0{,}26$ dl/g
$T_{5\%} = 337°$ C

**Exemple 4 : Réaction de l'oligoester II avec la bisoxazine B**

Dans un réacteur de 50 $cm^3$ équipé d'un chauffage à bain d'huile, d'une entrée et d'une sortie d'azote, et d'une agitation mécanique à ancre, on introduit 10,00 g (8,913 mmol) de II et 1,499 g (8,912 mmol) de bisoxazine B. Le mélange est porté à 180° C sous agitation pendant 20 min pour donner, après refroidissement, un polymère ayant les caractéristiques suivantes:

$[COOH] = 0{,}08$ mol/kg
$[\eta]_{inh} = 0{,}55$dl/g
$T_{5\%} = 346°$ C

**Exemple 5 : Réaction entre l'oligoamide I, l'oligoester II et la bisoxazoline A**

Dans un réacteur de 25 $cm^3$ équipé d'un chauffage à bain d'huile, d'une entrée et d'une sortie d'azote, et d'une agitation mécanique à ancre, on introduit 2,148 g (1,914 mmol) de II et 0,537 g (3,83 mmol) de bisoxazoline A. Le mélange est porté à 190° C sous agitation pendant 10 min. On ajoute ensuite 2,00 g (1,914 mmol) de I et chauffe à 200° C pendant 10 min. Après refroidissement, un polymère ayant les caractéristiques suivantes est obtenu :

$[COOH] = 0{,}21$ mol/kg
$[\eta]_{inh} = 0{,}60$ dl/G
$T_f = 156°C$
$T_{5\%} = 390°C$

**Exemple 6 : Réaction de l'oligomère tribloc III avec la bisoxazoline A**

Dans un réacteur de 50 $cm^3$ équipé d'un chauffage à bain d'huile, d'une entrée et d'une sortie d'azote, et d'une agitation mécanique à ancre, on introduit 10,00 g (3,55 mmol) de III et 0,497 g (3,55 mmol) de bisoxazoline A. Le mélange est porté à 200° C sous agitation pendant 20 min pour donner, après refroidissement, un polymère ayant les caractéristiques suivantes:

$[COOH] = 0{,}16$ mol/kg
$[\eta]_{inh} = 0{,}56$ dl/g
$T_f = 152°C$
$T_{5\%} = 403°C$

**Exemple 7 : Réaction de l'oligoamide IV avec la bisoxazine C**

Dans un réacteur de 250 $cm^3$ muni d'une agitation et équipé d'un système permettant de travailler sous atmosphère inerte ($N_2$) on introduit 186,5 g (0,1 mole) d'oligoamide IV et 21,62 g (0,1 mole) de bisoxazine C.

Le réacteur est plongé dans un bain d'huile porté à 280° C. Le milieu réactionnel est agité par un agitateur tournant à 50 tours/mln dès que la viscosité du milieu est suffisamment faible pour le permettre. Après 15 minutes à 280° C on observe une augmentation rapide de la viscosité du milieu réactionnel nécessitant une diminution de la vitesse d'agitation a 10 tours/min. Après 5 minutes dans ces conditions, la réaction est arrêtée.

Le polymère obtenu est translucide et ne présente selon l'analyse thermique qu'une transition vitreuse à 168° C. Sa viscosité de solution est de 0,87 dl $g^{-1}$.

**Exemple 8 : réaction de l'oligoamide V avec la bisoxazine D**

Dans le même réacteur décrit à l'exemple 7, on introduit 150 g (0,05 mole) d'oligoamide V et 10,81 g (0,05 mole) de bisoxazine D. En opérant dans des conditions analogues à celles de l'exemple 7, on observe après 10 minutes à 280° C une évolution de la viscosité du milieu réactionnel qui nécessite une diminution de la vitesse d'agitation. La réaction est arrêtée dans les cinq minutes suivantes.

Le polymère obtenu est translucide et ne présente selon l'analyse thermique qu'une transition vitreuse à 170° C. Sa viscosité de solution est de 0,93 dl $g^{-1}$.

**Exemple 9 : Réaction de l'oligoamide VI avec la bisoxazine C**

Dans le réacteur décrit à l'exemple 7, on introduit 25,80 g (0,01 mole) d'oligoamide VI et 2,16 g (0,01 mole) de bisoxazine C. Le réacteur est plongé dans un bain régulant à 295° C. Le milieu devient fluide après 5 minutes à cette température. On l'agite alors à la vitesse de 50 tours/minute pendant 15 minutes. Puis la vitesse d'agitation est réduite à 10 tours/minute et la réaction est poursuivie encore 5 minutes avant d'être arrêtée.

Le polymère obtenu est blanchâtre et opaque. Sa viscosité est de 0,78 dl $g^{-1}$.

L'analyse thermique révèle, outre une transition vitreuse à 78° C, un point de fusion à 275° C.

## Revendications

**1.** Polymères et copolymères comprenant au moins un motif récurrent de formule :

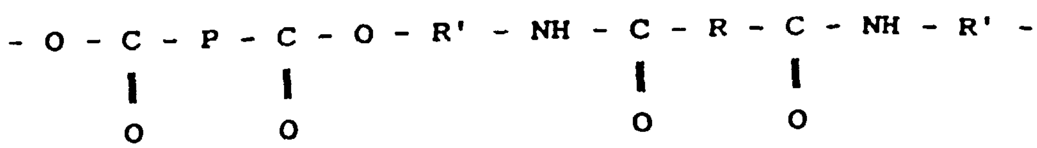

dans laquelle :

- R est une liaison simple, une chaîne hydrocarbonée aliphatique, linéaire ou cyclique, ou aromatique, pouvant être substituée,
- R' est une chaîne hydrocarbonée aliphatique ou aromatique, pouvant être substituée et dont la partie la plus courte reliant les motifs - O ... et - NH ... voisins comporte deux ou trois atomes de carbone, et
- P est le reste d'un oligomère

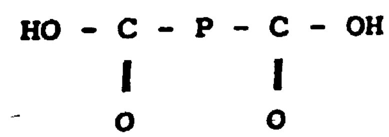

dont la viscosité de solution déterminée dans le méta-crésol à 30°C à des concentrations de 0,5 g/dl est inférieure à 0,50 dl.$g^{-1}$, et la masse molaire moyenne en nombre $\overline{M_N}$ est comprise entre 300 et 5 000 g/mol, ces polymères étant les produits de réaction d'un ou plusieurs oligomère(s)

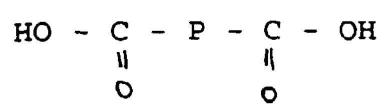

et d'une ou plusieurs bisoxazine(s) ou bisoxazoline(s) de formule(s) :

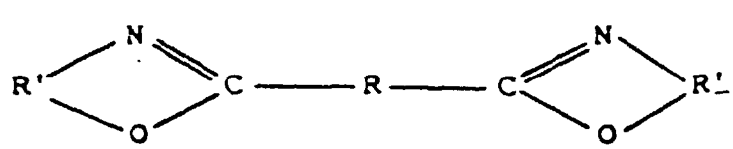

réaction dans laquelle le rapport

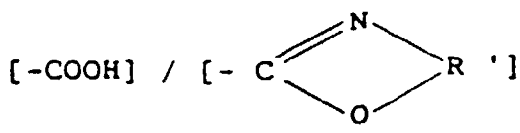

est maintenu entre 0,95 et 1,05.

**2.** Polymères et copolymères selon la revendication 1, dans lesquels R est une liaison simple entre deux atomes de carbone.

**3.** Polymères et copolymères selon la revendication 1, dans lesquels R est un groupe méta- ou paraphénylène.

**4.** Polymères et copolymères selon l'une des revendications 1 à 3, dans lequels R' est un groupe $-(CH_2)_p-$, avec p = 2 ou 3.

**5.** Polymères et copolymères selon l'une des revendications 1 à 4, dans lesquels P est le reste d'un oligomère comportant :

- un ou plusieurs blocs de polyamide, et/ou
- un ou plusieurs blocs de polyester, et/ou
- un ou plusieurs blocs de polyéther.

**6.** Procédé d'obtention de polymères et copolymères comprenant au moins un motif récurrent de formule:

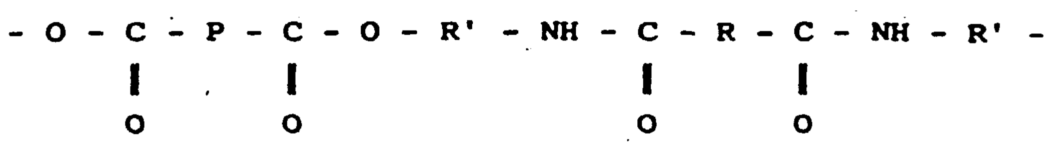

dans laquelle :

- R est une liaison simple, une chaîne hydrocarbonée aliphatique, linéaire ou cyclique, ou aromatique, pouvant être substituée,
- R' est une chaîne hydrocarbonée aliphatique ou aromatique, pouvant être substituée et dont la partie la plus courte reliant les motifs - O ... et -NH ... voisins comporte deux ou trois atomes de carbone, et
- P est le reste d'un oligomère

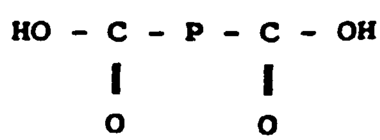

dont la viscosité de solution déterminée dans le méta-crésol à 30°C à des concentrations de 0,5 g/dl est inférieure à 0,50 $dl.g^{-1}$, et la masse molaire moyenne en nombre $\overline{M_N}$ est comprise entre 300 et 5 000 g/mol, procédé dans lequel on procède à une réaction d'addition en masse d'un ou plusieurs oligomère(s)

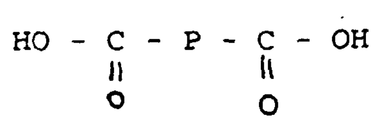

et d'une ou plusieurs bisoxazine(s) ou bisoxazoline(s) de formule(s) :

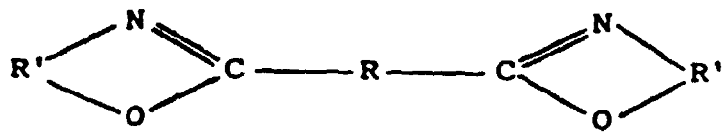

à une température supérieure à la température de fusion du ou des oligomère(s), à pression atmosphérique, en maintenant le rapport

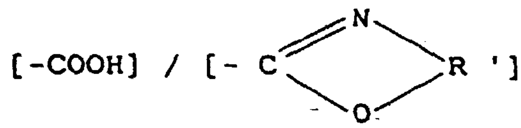

entre 0,95 et 1,05.

**7.** Procédé selon la revendication 6, caractérisé en ce que la température du milieu réactionnel est choisie entre 100 et 350° C, de sorte que la viscosité du ou des oligomères soit inférieure à 500 Pa.s, et en ce que la durée de la réaction est comprise entre 1 et 120 minutes.

**8.** Procédé selon la revendication 6 ou 7, caractérisé en ce qu'on ajoute au milieu réactionnel 0,001 à 2 % en poids, par rapport aux oligoméres, aux bisoxazines et bisoxazolines, d'un ou plusieurs catalyseurs.

**9.** Procédé selon l'une des revendications 6 à 8, caractérisé en ce que la réaction d'addition en masse est effectuée en discontinu dans un réacteur agité, ou en continu dans une extrudeuse ou dans un réacteur continu.

## Patentansprüche

**1.** Polymere und Copolymere, enthaltend mindestens eine wiederkehrende Einheit der Formel

$$-O-\underset{\underset{O}{\|}}{C}-P-\underset{\underset{O}{\|}}{C}-O-R'-NH-\underset{\underset{O}{\|}}{C}-R-\underset{\underset{O}{\|}}{C}-NH-R'-$$

in der:

- R eine Einfachbindung oder eine aromatische oder lineare oder cyclische, aliphatische Kohlenwasserstoffkette ist, die substituiert sein kann,
- R' eine aromatische oder aliphatische Kohlenwasserstoffkette ist, die substituiert sein kann und deren kürzerer Teil, der die benachbarten Einheiten -O ... und - NH ... verbindet, zwei bis drei Kohlenstoffatome enthält und
- P der Rest eines Oligomers

$$HO-\underset{\underset{O}{\|}}{C}-P-\underset{\underset{O}{\|}}{C}-OH$$

ist,
wobei die Viskosität der Lösung, die in Metakresol bei 30 °C bei Konzentrationen von 0,5 g/dl bestimmt wird, kleiner als 0,50 g/dl · $g^{-1}$ ist und die zahlenmittlere Molmasse $\overline{M_N}$ zwischen 300 und 5.000 g/mol liegt, wobei diese Polymere Reaktionsprodukte eines oder mehrerer Oligomere

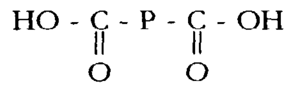

mit einem oder mehreren Bisoxazinen oder Bisoxazolinen der Formel(n)

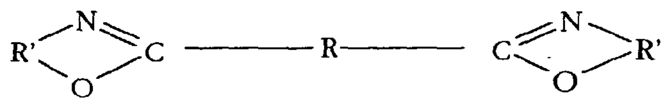

sind, wobei bei der Reaktion das Verhältnis

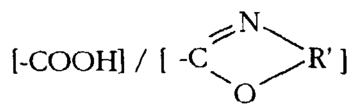

zwischen 0,95 und 1,05 konstantgehalten wird.

**2.** Polymere und Copolymere nach Anspruch 1, wobei R eine Einfachbindung zwischen zwei Kohlenstoffatomen ist.

**3.** Polymere und Copolymere nach Anspruch 1, wobei R eine Meta- oder Paraphenylengruppe ist.

**4.** Polymere und Copolymere nach einem der Ansprüche 1 bis 3, wobei R' eine Gruppe $-(CH_2)_p-$ mit p = 2 oder 3 ist.

**5.** Polymere und Copolymere nach einem der Ansprüche 1 bis 4, wobei P der Rest eines Oligomers ist, enthaltend:

- einen oder mehrere Polyamidblöcke und/oder
- einen oder mehrere Polyesterblöcke und/oder
- einen oder mehrere Polyetherblöcke.

**6.** Verfahren zur Herstellung von Polymeren und Copolymeren, enthaltend mindestens eine wiederkehrende Einheit der Formel

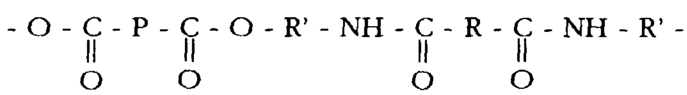

in der:

- R eine Einfachbindung oder eine aromatische oder lineare oder cyclische, aliphatische Kohlenwasserstoffkette ist, die substituiert sein kann,
- R' eine aromatische oder aliphatische Kohlenwasserstoffkette ist, die substituiert sein kann und deren kürzerer Teil, der die benachbarten Einheiten -O ... und -NH ... verbindet, zwei oder drei Kohlenstoffatome enthält und
- P der Rest eines Oligomers

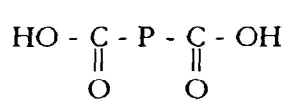

ist,
wobei die Viskosität der Lösung, die in Metakresol bei 30 °C bei Konzentrationen von 0,5 g/dl bestimmt wird,

kleiner als 0,50 dl · $g^{-1}$ ist und die zahlenmittlere Molmasse $\overline{M_N}$ zwischen 300 und 5.000 g/mol liegt, wobei man bei dem Verfahren eine Additionsreaktion in Masse eines oder mehrerer Oligomere

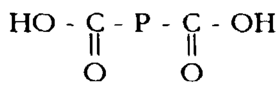

mit einem oder mehreren Bisoxazinen oder Bisoxazolinen der Formel(n)

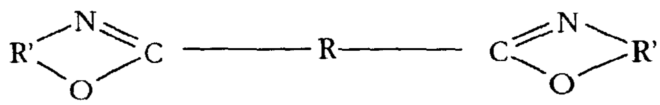

bei einer Temperatur, die höher als die Schmelztemperatur des oder der Oligomere ist, bei Atmosphärendruck durchführt, wobei das Verhältnis

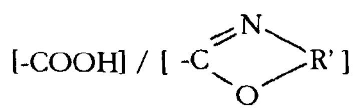

zwischen 0,95 und 1,05 konstantgehalten wird.

**7.** Verfahren nach Anspruch 6, dadurch gekennzeichnet, daß die Temperatur des Reaktionsmilieus zwischen 100 und 350 °C ausgewählt ist, so daß die Viskosität des oder der Oligomere kleiner als 500 Pa·s ist und die Reaktionsdauer zwischen 1 und 120 Minuten liegt.

**8.** Verfahren nach Anspruch 6 oder 7, dadurch gekennzeichnet, daß man zu dem Reaktionsmilieu 0,001 bis 2 Gew.-% eines oder mehrerer Katalysatoren hinzugibt, bezogen auf die Oligomeren, die Bisoxazine und Bisoxazoline.

**9.** Verfahren nach einem der Ansprüche 6 bis 8, dadurch gekennzeichnet, daß die Additionsreaktion in Masse diskontinuierlich in einem gerührten Reaktor oder kontinuierlich in einem Extruder oder in einem kontinuierlichen Reaktor durchgeführt wird.

## Claims

**1.** Polymers and copolymers comprising at least one repeat unit of formula:

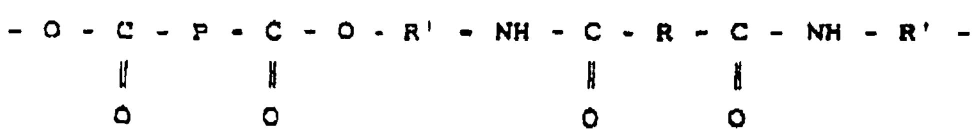

in which

- R is a single bond or a linear or cyclic, aliphatic or aromatic hydrocarbon chain which may be substituted,
- R' is an aliphatic or aromatic hydrocarbon chain which may be substituted and in which the shortest part connecting the neighbouring -O ... and -NH ... units comprises two or three carbon atoms, and
- P is the residue of an oligomer

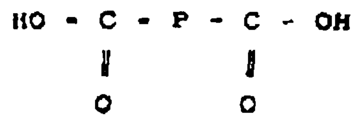

whose solution viscosity, determined in meta-cresol at 30°C at concentrations of 0.5 g/dl, is lower than 0.50 dl $g^{-1}$ and whose number-average molecular mass $\overline{M}_N$ is between 300 and 5000 g/mol,
these polymers being the products of reaction of one or more oligomer(s)

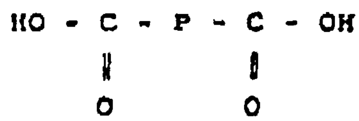

and of one or more bisoxazine(s) or bisoxazoline(s) of formula(e) :

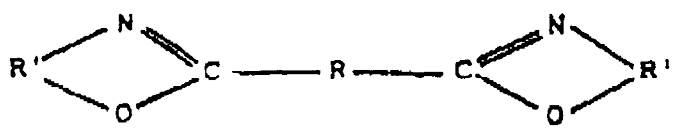

in which reaction the ratio

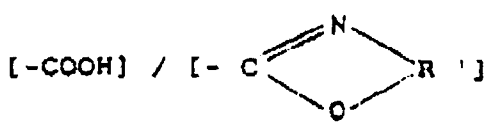

is maintained between 0.95 and 1.05.

2. Polymers and copolymers according to Claim 1, in which R is a single bond between two carbon atoms.

3. Polymers and copolymers according to Claim 1, in which R is a meta- or para-phenylene group.

4. Polymers and copolymers according to one of Claims 1 to 3, in which R' is a $-(CH_2)_p-$ group, with p = 2 or 3.

5. Polymers and copolymers according to one of Claims 1 to 4, in which p is the residue of an oligomer comprising:

- one or more polyamide blocks and/or
- one or more polyester blocks and/or
- one or more polyether blocks.

6. Process for obtaining polymers and copolymers comprising at least one repeat unit of formula:

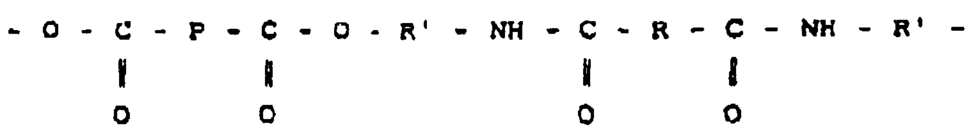

in which

- R is a single bond or a linear or cyclic, aliphatic or aromatic hydrocarbon chain which may be substituted,

- R' is an aliphatic or aromatic hydrocarbon chain which may be substituted and in which the shortest part connecting the neighbouring -O ... and -NH ... units comprises two or three carbon atoms, and
- P is the residue of an oligomer

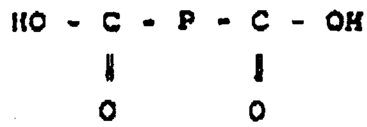

whose solution viscosity, determined in meta-cresol at 30°C at concentrations of 0.5 g/dl is lower than 0.50 dl $g^{-1}$, and whose number-average molecular mass $\overline{M}_N$ is between 300 and 5000 g/mol,
in which process there is carried out a bulk addition reaction of one or more oligomer(s)

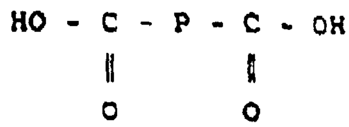

and one or more bisoxazine(s) or bisoxazoline(s) of the formula(e):

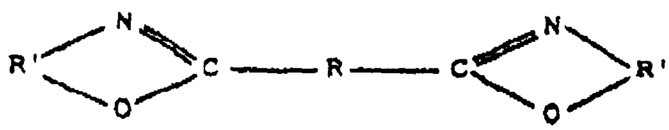

at a temperature above the melting temperature of the oligomer(s), at atmospheric pressure, the ratio

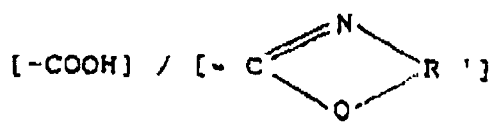

being maintained between 0.95 and 1.05.

**7.** Process according to Claim 6, characterized in that the temperature of the reaction mixture is chosen between 100 and 350°C, so that the viscosity of the oligomer(s) is below 500 Pa s, and in that the reaction time is between 1 and 120 minutes.

**8.** Process according to Claim 6 or 7, characterized in that 0.001 to 2 % by weight of one or more catalysts, relative to the oligomers, to the bisoxazines and to the bisoxazolines, is added to the reaction mixture.

**9.** Process according to one of Claims 6 to 8, characterized in that the bulk addition reaction is performed noncontinuously in a stirred reactor or continuously in an extruder or in a continuous reactor.